# EUROPEAN PATENT SPECIFICATION

(11) **EP 3 385 642 B1**
(45) Date of publication and mention of the grant of the patent: **28.08.2019**
(21) Application number: 15909748.4
(22) Date of filing: 01.12.2015
(51) Int. Cl.: F25B 27/02, F25B 25/00, F25B 9/00, F25B 13/00

(54) **EXHAUST HEAT RECOVERY SYSTEM**
ABGASABWÄRMERÜCKGEWINNUNGSSYSTEM
SYSTÈME DE RÉCUPÉRATION DE CHALEUR D'ÉCHAPPEMENT

(43) Date of publication of application: 10.10.2018
(73) Proprietor: Mitsubishi Electric Corporation, Chiyoda-ku Tokyo 100-8310 (JP)
(72) Inventor: TAKATA, Shigeo, Tokyo 100-8310 (JP)
(74) Representative: Pfenning, Meinig & Partner mbB
(86) International application number: PCT/JP2015/083755
(87) International publication number: WO 2017/094118

(56) References cited:
- EP-A1- 2 270 322
- JP-A- H02 233 946
- JP-A- H02 233 946
- JP-A- H07 167 526
- JP-A- S60 182 950
- JP-B2- 2 760 377

## Description

### Technical Field

The present invention relates to an exhaust heat recovery system that circulates exhaust heat in a system to recover and utilize it for applications such as air conditioning and hot water supply, in which exhaust heat recovery system, an eventually excess amount of heat is efficiently disposed of to the outside of the system.

### Background Art

In conventional exhaust heat recovery system, efforts have been made to effectively utilize heat, such as exhaust heat generated in a system and ground heat present outside and near the system. Some of such exhaust heat recovery systems intended to effectively utilize exhaust heat generated in a system and heat present outside the system usually exhaust an eventually excess amount of heat to the outside of the system, such as into the ambient air and sewage (for example, see Patent Literature 1).

In Patent Literature 1, a cooling tower is provided in the system as a heat exhausting unit, and heat is rejected into the ambient air, sewage, and the like by the cooling tower to exhaust heat outside the system. In Patent Literature 2, a cooling device for electronic equipment is disclosed which comprises a transfer device configured to circulate the first refrigerant, a heat exchanger, an exhaust-heat heat exchanger configured to emit excess heat in the system to the outside and an auxiliary heat exchanging device, wherein the auxiliary heat exchanging device is only operated when a water temperature fed from an outdoor cooling tower is high.

### Citation List

### Patent Literature

Patent Literature 1: Japanese Unexamined Patent Application Publication No. 1995-133992Patent Literature 2: JP H02 233946 A

### Summary of Invention

### Technical Problem

A problem with a conventional exhaust heat recovery system such as one in Patent Literature 1 is that the amount of exhaust heat cannot be adjusted in the heat exhausting unit such as the cooling tower, and thus in the case of a large amount of exhaust heat, it is necessary to increase the size or number of the heat exhausting units, which results in a large exhaust heat recovery system.

An object of the present invention, which has been made to solve the above problem, is to provide an exhaust heat recovery system capable of accommodating an increased amount of exhaust heat without increasing the size of the system. Solution to Problem

An exhaust heat recovery system according to an embodiment of the present invention comprises: a transfer device configured to circulate the first refrigerant; an exhaust heat recovery heat exchanger configured to recover exhaust heat from outside of the exhaust heat recovery system; an exhaust heat supply heat exchanger configured to supply the exhaust heat to the outside of the exhaust heat recovery system; an exhaust-heat heat exchanger configured to emit excess heat in the system to the outside of the exhaust heat recovery system; an auxiliary heat exchanging device in which a second refrigerant circulates, the auxiliary heat exchanging device having a compressor, a first heat exchanger, an expansion device, and a second heat exchanger connected thereto sequentially by pipes; the exhaust heat recovery heat exchanger, the transfer device, the first heat exchanger, the exhaust-heat heat exchanger, the second heat exchanger, and the exhaust heat supply heat exchanger being connected sequentially by pipes to circulate the first refrigerant, the auxiliary heat exchanging device including a controller, the controller being configured to, when a temperature of the first refrigerant flowing on an outlet side of the second heat exchanger is higher than an upper limit of a set temperature range, control a rotation speed of the compressor and an amount of throttle of the expansion device such that the temperature of the first refrigerant entering the exhaust-heat heat exchanger increases.

### Advantageous Effects of Invention

According to an exhaust heat recovery system according to an embodiment of the present invention, temperature of the first refrigerant flowing in the exhaust-heat heat exchanger is changed by the auxiliary heat exchanging device to control the amount of heat exchanged. The heat exchangeability of the exhaust-heat heat exchanger can thereby be increased, and thus the amount of exhaust heat can be increased without increasing the size of the system.

### Brief Description of Drawings

Fig. 1 is a block diagram illustrating an exhaust heat recovery system according to an embodiment of the present invention.
Fig. 2 is a block diagram illustrating a detail of an auxiliary heat exchanging device in Fig. 1.
Fig. 3 is a block diagram illustrating a detail of a controller in Fig. 2.
Fig. 4 is a control flow chart for an auxiliary heat exchanging device according to an embodiment of the present invention.

### Description of Embodiments

An embodiment of the present invention will now be described with reference to drawings. It is noted that the present invention is not limited to the embodiment described below. In the following drawings, the size relationship between components may differ from actual relationship.

### Embodiment

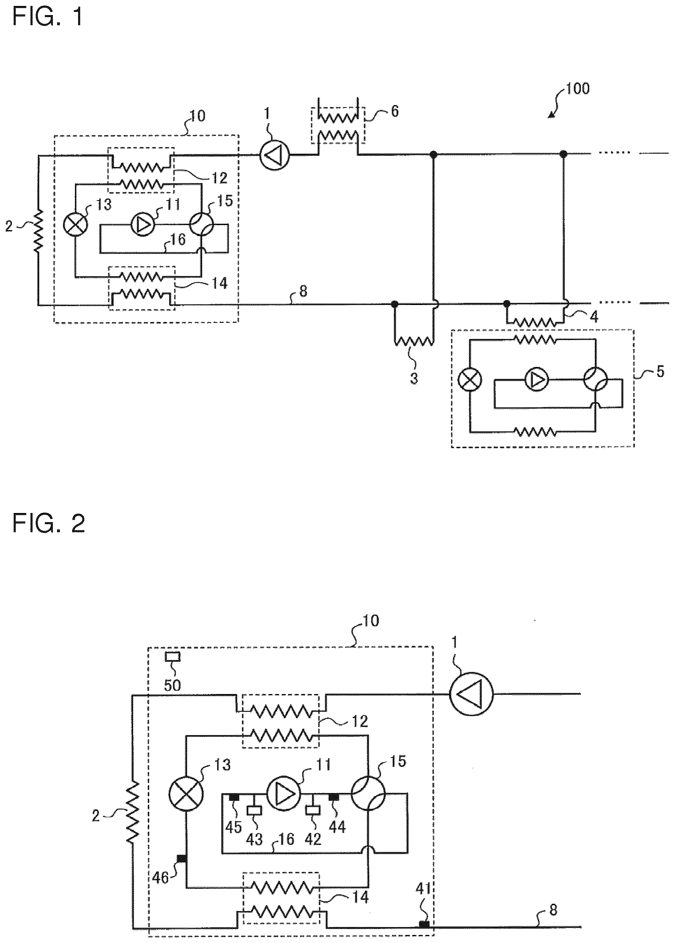

Fig. 1 is a block diagram illustrating an exhaust heat recovery system 100 according to an embodiment of the present invention.

The exhaust heat recovery system 100 according to an embodiment of the present invention recovers exhaust heat in air conditioning systems that serve applications such as air conditioning and hot water supply via refrigerant such as water. The system 100 controls an auxiliary heat exchanging device 10 to adjust the temperature of the refrigerant for adjusting the amount of heat disposed of to the outside of the system, such as into the ambient air and sewage.

As shown in Fig. 1, the exhaust heat recovery system 100 according to an embodiment of the present invention includes a transfer device 1, an exhaust-heat heat exchanger 2, a fan coil unit 3, a first refrigerant side heat exchanger 4, an exhaust heat recovery heat exchanger 6, and the auxiliary heat exchanging device 10. These devices are connected by a transfer pipe 8 in which a first refrigerant, for example water, flows. The system 100 also includes a heat pump cycle device 5.

The fan coil unit 3 corresponds to an "exhaust heat supply heat exchanger" of the present invention.

The transfer device 1 is for example a pump and transfers the first refrigerant. The exhaust-heat heat exchanger 2 exchanges heat of the first refrigerant with the ambient air, sewage, and the like outside the system to exhaust an excess amount of the heat of the first refrigerant generated in the system to the outside of the system. The fan coil unit 3 directly exchanges heat of the first refrigerant with air in a room outside the system for air conditioning. The first refrigerant side heat exchanger 4 and the heat pump cycle device 5 serve as for example an air-conditioning device, a refrigerating device, and a hot water supply device. The first refrigerant side heat exchanger 4 exchanges heat with refrigerant in the heat pump cycle device 5 with the first refrigerant being a heat source. The heat pump cycle device 5 exchanges heat of the refrigerant, which has been subjected heat exchange with the first refrigerant side heat exchanger 4, with air outside the system for heating and cooling for a room or for refrigeration in the device, or exchanges heat of the refrigerant with water outside the system for hot water supply. The exhaust heat recovery heat exchanger 6 exchanges heat of the first refrigerant with an exhaust heat recovery source to recover heat from the outside of the system. The auxiliary heat exchanging device 10 controls the temperature of the first refrigerant on the inlet side of the exhaust-heat heat exchanger 2, and also controls the temperature of the first refrigerant on the outlet side of the exhaust-heat heat exchanger 2.

Although the exhaust heat recovery system 100 is herein provided with one transfer device 1, one exhaust heat recovery heat exchanger 6, one fan coil unit 3, and one heat pump cycle device 5, this is not to be limiting and the system 100 may be provided with multiple units of each device. Furthermore, multiple exhaust-heat heat exchangers 2 and auxiliary heat exchanging devices 10 may be provided. In this case, they contribute to partial and distributed exhaustion of heat, and exhaust air from a ventilation device (not shown) can be effectively utilized.

As shown in Fig. 1, the exhaust heat recovery heat exchanger 6 is connected in series with the transfer device 1, the auxiliary heat exchanging device 10, and the exhaust-heat heat exchanger 2. The fan coil unit 3 and the first refrigerant side heat exchanger 4 are connected in parallel with the transfer device 1, the auxiliary heat exchanging device 10, and the exhaust-heat heat exchanger 2. When multiple exhaust-heat heat exchangers 2 are provided, they can be connected in parallel, instead of in series, with the transfer device 1 and the auxiliary heat exchanging device 10. Similarly, when multiple auxiliary heat exchanging devices 10 are provided, they can also be connected in parallel, instead of in series, with the transfer device 1 and the exhaust-heat heat exchanger 2. In such cases, the parallel connections contribute to distributed exhaustion of heat for the first refrigerant through the transfer pipe 8, and the exhaust heat recovery system 100 can be partially utilized in combination with a distributed arrangement of the transfer device 1.

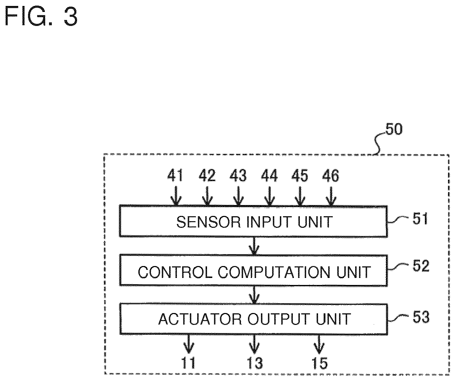

Fig. 2 is a block diagram illustrating a detail of the auxiliary heat exchanging device 10 in Fig. 1, and Fig. 3 is a block diagram illustrating a detail of a controller 50 in Fig. 2.

The auxiliary heat exchanging device 10 will now be described in detail.

As shown in Fig. 2, the auxiliary heat exchanging device 10 is connected both on the inlet and outlet sides of the exhaust-heat heat exchanger 2 and arranged such that the exhaust-heat heat exchanger 2 is interposed between a first heat exchanger 12 and a second heat exchanger 14 of the auxiliary heat exchanging device 10.

The auxiliary heat exchanging device 10 establishes a heat pump cycle using a second refrigerant that is different from the first refrigerant. The device 10 includes a compressor 11 for compressing the second refrigerant, a first heat exchanger 12 for exchanging heat between the first refrigerant and the second refrigerant on the inlet side of the exhaust-heat heat exchanger 2, an expansion device 13 for reducing the pressure of the second refrigerant, a second heat exchanger 14 for exchanging heat between the first refrigerant and the second refrigerant on the outlet side of the exhaust-heat heat exchanger 2, and a flow channel switching device 15 for switching the function of the first heat exchanger 12 and the second heat exchanger 14 between a condenser and an evaporator. These are connected by a transfer pipe 16 in which the second refrigerant flows. It is noted that the flow channel switching device 15 may be formed of, but not limited to, a four-way valve, for example.

The auxiliary heat exchanging device 10 also includes an outlet temperature detector 41 for detecting the temperature of the first refrigerant flowing on the outlet side of the second heat exchanger 14 (hereinafter referred to as "outlet temperature"), a discharge pressure detector 42 for detecting the pressure of the second refrigerant flowing on the discharge side of the compressor 11 (hereinafter referred to as "discharge pressure"), a suction pressure detector 43 for detecting the pressure of the second refrigerant flowing on the suction side of the compressor 11 (hereinafter referred to as "suction pressure"), a discharge temperature detector 44 for detecting the temperature of the second refrigerant flowing on the discharge side of the compressor 11 (hereinafter referred to as "discharge temperature"), a suction temperature detector 45 for detecting the temperature of the second refrigerant flowing on the suction side of the compressor 11 (hereinafter referred to as "suction temperature"), and a midway temperature detector 46 for detecting the temperature of the second refrigerant flowing between the expansion device 13 and the second heat exchanger 14 (hereinafter referred to as "midway temperature"). The pressure detectors are, for example, pressure sensors, and the temperature detectors are, for example, thermistors.

Further, the auxiliary heat exchanging device 10 includes the controller 50, and as shown in Fig. 3, the controller 50 is made up of a sensor input unit 51 for capturing values detected by the detectors described above, a control computation unit 52 for transmitting information based on information from the sensor input unit 51, and an actuator output unit 53 for driving the compressor 11, expansion device 13, and the flow channel switching device 15 based on the information from the control computation unit 52. In other words, the operation of the auxiliary heat exchanging device 10 is controlled by the sensor input unit 51, the control computation unit 52, and the actuator output unit 53 of the controller 50. The control computation unit 52 can determine saturation temperature of the second refrigerant flowing on the discharge side of the compressor 11 (hereinafter referred to as "discharge saturation temperature") according to the discharge pressure, and can also determine saturation temperature of the second refrigerant flowing on the suction side of the compressor 11 (hereinafter referred to as "suction saturation temperature") according to the suction pressure.

The operation of the exhaust heat recovery system 100 according to an embodiment of the present invention will now be described.

The exhaust heat recovery system 100 recovers exhaust heat from an exhaust heat source outside the system through the exhaust heat recovery heat exchanger 6 into the first refrigerant that is transferred in the transfer pipe 8 by the transfer device 1, and supplies the recovered exhaust heat to the heat pump cycle device 5 through the fan coil unit 3 and the first refrigerant side heat exchanger 4 in the system. The system 100 then heats a room or heats water via the fan coil unit 3 and heat pump cycle device 5. The system 100 also recovers heat from the first refrigerant side heat exchanger 4 through the fan coil unit 3 and the heat pump cycle device 5. Via the fan coil unit 3 and heat pump cycle device 5, the system 100 then cools a room or refrigerates inside the device.

At this time, when the amount of heat is excessive, the excess heat is to be exhausted to the outside of the system from the exhaust-heat heat exchanger 2, and when the amount of heat is insufficient, the insufficient heat is to be recovered from the outside of the system into the exhaust-heat heat exchanger 2. At this time, the auxiliary heat exchanging device 10 is controlled to increase the heat exchangeability of the exhaust-heat heat exchanger 2 if required. Specifically, the auxiliary heat exchanging device 10 controls the temperature of the first refrigerant flowing in the exhaust-heat heat exchanger 2 such that the temperature difference increases relative to the outside of the system to enhance heat exchange, and such that the temperature of the first refrigerant remains within a set temperature range. The auxiliary heat exchanging device 10 also performs control such that the outlet temperature of the first refrigerant remains within the set temperature range.

It is noted that the set temperature range is dependent on the amount of heat required in the fan coil unit 3 and the heat pump cycle device 5 such that the required amount of heat in the fan coil unit 3 and the heat pump cycle device 5 is neither excessive nor insufficient.

To force heat to move toward the outside of the system from the first refrigerant for increasing the heat exchangeability of the exhaust-heat heat exchanger 2, in other words, to exhaust excess heat, the flow channel switching device 15 is switched such that the first heat exchanger 12 functions as a condenser and the second heat exchanger 14 functions as an evaporator. Specifically, the device 15 is switched such that the second refrigerant discharged from the compressor 11 flows through the first heat exchanger 12. Then the rotation speed of the compressor 11 and the amount of throttle of the expansion device 13 are adjusted to heat the first refrigerant in the first heat exchanger 12 such that the temperature of the first refrigerant increases when it enters the exhaust-heat heat exchanger 2 to enhance heat exchange in the exhaust-heat heat exchanger 2. The first refrigerant is thereafter cooled in the exhaust-heat heat exchanger 2. The heat-exchanged first refrigerant is further cooled in the second heat exchanger 14 such that the outlet temperature of the first refrigerant is controlled to remain within the set temperature range.

On the other hand, to force heat to move from the outside of the system toward the first refrigerant, in other words, to recover insufficient heat, the flow channel switching device 15 is switched such that the first heat exchanger 12 functions as an evaporator and the second heat exchanger 14 functions as a condenser. Specifically, the device 15 is switched such that the second refrigerant discharged from the compressor 11 flows through the second heat exchanger 14. Then the rotation speed of the compressor 11 and the amount of throttle of the expansion device 13 are adjusted to cool the first refrigerant in the first heat exchanger 12 such that the temperature of the first refrigerant decreases when it enters the exhaust-heat heat exchanger 2 to enhance heat exchange in the exhaust-heat heat exchanger 2. The first refrigerant is thereafter heated in the exhaust-heat heat exchanger 2. The heat-exchanged first refrigerant is further heated in the second heat exchanger 14 such that the outlet temperature of the first refrigerant is controlled to remain within the set temperature range.

When the outlet temperature of the first refrigerant remains within the set temperature range and therefore temperature control of auxiliary refrigerant, namely the first refrigerant, is not required in the auxiliary heat exchanging device 10, the compressor 11 is disabled and thereby the heat of the first refrigerant is exchanged only by the exhaust-heat heat exchanger 2 such that the first heat exchanger 12 and the second heat exchanger 14 are not involved in heat exchange.

It is noted that the control of the amount of heat exchanged in the exhaust-heat heat exchanger 2 can otherwise be implemented by means of, for example, wind speed control on a fan in heat exchange with the ambient air, although the details of which are omitted herein.

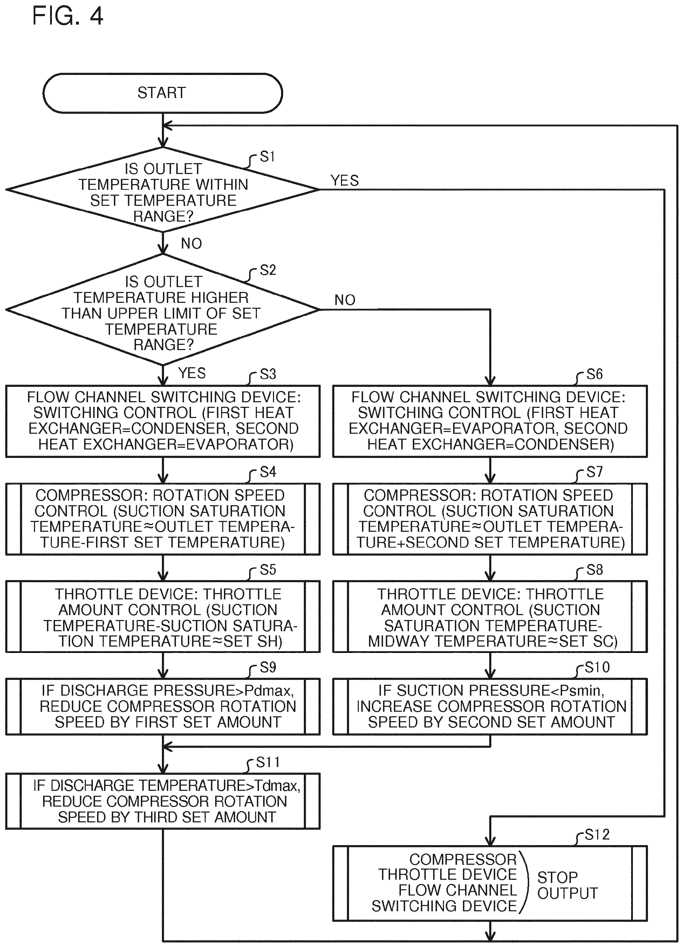

Fig. 4 is a control flow chart for the auxiliary heat exchanging device 10 according to an embodiment of the present invention.

The operation of the auxiliary heat exchanging device 10 according to an embodiment of the present invention will now be described with reference to the control flow chart in Fig. 4.

In step S1, the controller 50 determines whether the outlet temperature of the first refrigerant remains within the set temperature range, and if it is determined that it remains within the set temperature range, the process proceeds to step S12 and if it is determined that it does not, the process proceeds to step S2.

In step S2, the controller 50 determines whether the outlet temperature of the first refrigerant is higher than the upper limit of the set temperature range, and if it is determined that it is higher, the process proceeds to step S3 and if otherwise, that is, it is lower than the lower limit of the set temperature range, the process proceeds to step S6.

In step S3, the controller 50 causes the flow channel switching device 15 to switch such that the first heat exchanger 12 functions as a condenser and the second heat exchanger 14 functions as an evaporator, and the process proceeds to step S4.

In step S4, the controller 50 controls the rotation speed of the compressor 11 such that the suction saturation temperature assumes a value equivalent to the outlet temperature less a first set temperature, and the process proceeds to step S5. At this time, the compressor 11 has a minimum valve and a maximum valve previously set to the rotation speed thereof and is controlled within the range.

In step S5, the controller 50 adjusts the amount of throttle of the expansion device 13 such that the suction temperature less the suction saturation temperature reaches a set amount of superheat (SH), and the process proceeds to step S9.

In step S9, the controller 50 reduces the rotation speed of the compressor 11 by a first set amount when the discharge pressure is higher than an upper limit of a set pressure range (Pdmax), and the process proceeds to step S11.

In step S6, the controller 50 causes the flow channel switching device 15 to switch such that the first heat exchanger 12 functions as an evaporator and the second heat exchanger 14 functions as a condenser, and the process proceeds to step S7.

In step S7, the controller 50 controls the rotation speed of the compressor 11 such that the discharge saturation temperature assumes a value equivalent to the outlet temperature plus a second set temperature, and the process proceeds to step S8. At this time, the compressor 11 has a minimum valve and a maximum valve previously set to the rotation speed thereof and is controlled within the range.

In step S8, the controller 50 adjusts the amount of throttle of the expansion device 13 such that the discharge saturation temperature less the midway temperature reaches a set amount of subcooling (SC), and the process proceeds to step S10.

In step S10, the controller 50 increases the rotation speed of the compressor 11 by a second set amount when the suction pressure is lower than a lower limit of a set suction pressure (Psmin), and the process proceeds to step S11.

In step S11, the controller 50 reduces the rotation speed of the compressor 11 by a third set amount when the discharge temperature is higher than an upper limit of a set discharge temperature (Tdmax), and the process returns to step S1.

In step S12, the controller 50 causes the compressor to stop based on a stop signal and controls the expansion device 13 to close, and the process returns to step S1. At this time, the flow channel switching device 15 is prevented from switching or switched into a predetermined state.

As described above, according to the exhaust heat recovery system 100 according to an embodiment of the present invention, the temperature of the first refrigerant flowing in the exhaust-heat heat exchanger 2 is changed by the auxiliary heat exchanging device 10 to control the amount of heat exchanged in the exhaust-heat heat exchanger 2. It is thereby possible to increase the heat exchangeability of the exhaust-heat heat exchanger 2. As a result, the amount of exhaust heat can be increased without increasing the size of the exhaust heat recovery system 100. Furthermore, when the amount of heat is insufficient, the insufficient heat can be recovered from the outside of the system into the exhaust-heat heat exchanger 2, and therefore a recovered amount of heat can be increased without increasing the size of the exhaust heat recovery system 100.

By controlling such that the outlet temperature of the first refrigerant remains within the set temperature range, it is possible to steadily supply the required amount of heat to the fan coil unit 3 and the heat pump cycle device 5. As a result, it is possible to prevent an excess and a deficiency of heat in the fan coil unit 3 and the heat pump cycle device 5.

It is possible to use the auxiliary heat exchanging device 10 in place of the heat pump cycle device 5 for producing and utilizing hot or cold temperature using the first refrigerant.

It is possible to have increased effect of enhancing heat exchange in the exhaust-heat heat exchanger 2 by using CO₂, which is suitable for applications such as hot water supply and refrigeration, for refrigerant of the auxiliary heat exchanging device 10, namely the second refrigerant, to increase the temperature difference between temperature outside the system such as ambient air temperature and sewage temperature and the temperature of the first refrigerant.

Since the first refrigerant itself is effectively utilized in the auxiliary heat exchanging device 10, replenishment, replacement, or other works, for the first refrigerant can be accomplished at the same time as works on the transfer pipe 8, providing labor-saving workability.

The exhaust-heat heat exchanger 2 can still be utilized to exhaust heat even after the auxiliary heat exchanging device 10 is stopped, which is an unobtainable advantage in exhausting heat by means of a heat pump cycle device in general.

### Reference Signs List

1 transfer device 2 exhaust-heat heat exchanger 3 fan coil unit 4 first refrigerant side heat exchanger 5 heat pump cycle device 6 exhaust heat recovery heat exchanger 8 transfer pipe 10 auxiliary heat exchanging device 11 compressor 12 first heat exchanger 13 expansion device 14 second heat exchanger 15 flow channel switching device 16 transfer pipe 41 outlet temperature detector 42 discharge pressure detector 43 suction pressure detector 44 discharge temperature detector 45 suction temperature detector
46 midway temperature detector 50 controller 51 sensor input unit
52 control computation unit 53 actuator output unit 100 exhaust heat recovery system

## Claims

1. An exhaust heat recovery system (100) in which a first refrigerant circulates, the exhaust heat recovery system (100) comprising:
a transfer device (1) configured to circulate the first refrigerant;
an exhaust heat recovery heat exchanger (6) configured to recover exhaust heat from outside of the exhaust heat recovery system;
an exhaust heat supply heat exchanger (3) configured to supply the exhaust heat to the outside of the exhaust heat recovery system;
an exhaust-heat heat exchanger (2) configured to emit excess heat in the system to the outside of the exhaust heat recovery system;
an auxiliary heat exchanging device (10) in which a second refrigerant circulates, the auxiliary heat exchanging device (10) having a compressor (11), a first heat exchanger (12), an expansion device (13), and a second heat exchanger (14) connected thereto sequentially by pipes;
the exhaust heat recovery heat exchanger (6), the transfer device (1), the first heat exchanger (12), the exhaust-heat heat exchanger (2), the second heat exchanger (14), and the exhaust heat supply heat exchanger (3) being connected sequentially by pipes to circulate the first refrigerant,
the auxiliary heat exchanging device (10) including a controller (50),
the controller (50) being configured to, when a temperature of the first refrigerant flowing on an outlet side of the second heat exchanger (14) is higher than an upper limit of a set temperature range, control a rotation speed of the compressor (11) and an amount of throttle of the expansion device (13) such that the temperature of the first refrigerant entering the exhaust-heat heat exchanger (2) increases.

2. The exhaust heat recovery system (100) of claim 1, wherein the auxiliary heat exchanging device (10) includes a flow channel switching device (15),
wherein the controller (50) is configured to,
when the temperature of the first refrigerant flowing on the outlet side of the second heat exchanger (14) is higher than the upper limit of the set temperature range,
cause the flow channel switching device (15) to switch such that the second refrigerant discharged from the compressor (11) flows through the first heat exchanger (12), and
control a rotation speed of the compressor (11) and an amount of throttle of the expansion device (13) such that the temperature of the first refrigerant entering the exhaust-heat heat exchanger (2) increases and the temperature on the outlet side of the second heat exchanger (14) remains within the set temperature range, and
when the temperature of the first refrigerant flowing on the outlet side of the second heat exchanger (14) is lower than a lower limit value of the set temperature range,
cause the flow channel switching device (15) to switch such that the second refrigerant discharged from the compressor (11) flows through the second heat exchanger (14), and
control the rotation speed of the compressor (11) and the amount of throttle of the expansion device (13) such that the temperature of the first refrigerant entering the exhaust-heat heat exchanger (2) decreases and the temperature on the outlet side of the second heat exchanger (14) remains within the set temperature range.

3. The exhaust heat recovery system (100) of claim 1 or 2, wherein
the second refrigerant is CO₂.

## Patentansprüche

1. Abgaswärmerückgewinnungssystem (100), in dem ein erstes Kältemittel zirkuliert, wobei das Abgaswärmerückgewinnungssystem (100) umfasst:
eine Transfereinrichtung (1), die eingerichtet ist, das erste Kältemittel zu zirkulieren;
einen Abgaswärmerückgewinnungswärmetauscher (6), der eingerichtet ist, Abgaswärme von außerhalb des Abgaswärmerückgewinnungssystems zurückzugewinnen;
einen Abgaswärmebereitstellungswärmetauscher (3), der eingerichtet ist, die Abgaswärme nach außerhalb des Abgaswärmerückgewinnungssystems zu führen;
einen Abgaswärme-Wärmetauscher (2), der eingerichtet ist, überschüssige Wärme in dem System nach außerhalb des Abgaswärmerückgewinnungssystems zu emittieren;
eine Hilfswärmeaustauscheinrichtung (10), in der ein zweites Kältemittel zirkuliert, wobei die Hilfswärmeaustauscheinrichtung (10) einen Verdichter (11), einen ersten Wärmetauscher (12), eine Expansionseinrichtung (13) und einen zweiten Wärmetauscher (14) aufweist, die mit diesem sequentiell durch Leitungen verbunden sind;
der Abgaswärmerückgewinnungswärmetauscher (6), die Transfereinrichtung (1), der erste Wärmetauscher (12), der Abgaswärme-Wärmetauscher (2), der zweite Wärmetauscher (14) und der Abgaswärmebereitstellungswärmetauscher (3) sequentiell durch Leitungen verbunden sind, um das erste Kältemittel zu zirkulieren,
die Hilfswärmeaustauscheinrichtung (10) eine Steuereinheit (50) aufweist,
wobei die Steuereinheit (50) eingerichtet ist, um, wenn eine Temperatur des ersten Kältemittels, das auf einer Auslassseite des zweiten Wärmetauschers (14) strömt, höher ist als eine Obergrenze eines voreingestellten Temperaturbereichs, eine Rotationsgeschwindigkeit des Verdichters (11) und eine Drosselgröße der Expansionseinrichtung (13) derart zu steuern, dass die Temperatur des in den Abgaswärme-Wärmetauscher (2) eintretenden, ersten Kältemittels ansteigt.

2. Abgaswärmerückgewinnungssystem (100) nach Anspruch 1, wobei die Hilfswärmeaustauscheinrichtung (10) eine Strömungskanalschalteinrichtung (15) aufweist,
wobei die Steuereinheit (50) eingerichtet ist,
wenn die Temperatur des ersten Kältemittels, das auf der Auslassseite des zweiten Wärmetauschers (14) strömt, höher ist als die Obergrenze des eingestellten Temperaturbereichs,
zu bewirken, dass die Strömungskanalschalteinrichtung (15) derart schaltet, dass das zweite Kältemittel, das aus dem Verdichter (11) ausgegeben wird, durch den ersten Wärmetauscher strömt (12), und
eine Rotationsgeschwindigkeit des Verdichters (11) und eine Drosselgröße der Expansionseinrichtung (13) derart zu steuern, dass die Temperatur des in den Abgaswärme-Wärmetauscher (2) eintretenden ersten Kältemittels ansteigt und die Temperatur auf der Auslassseite des zweiten Wärmetauschers (14) innerhalb des eingestellten Temperaturbereichs bleibt, und
wenn die Temperatur des ersten Kältemittels, das auf der Auslassseite des zweiten Wärmetauschers (14) strömt, niedriger ist als ein unterer Grenzwert des eingestellten Temperaturbereichs,
zu bewirken, dass die Strömungskanalschalteinrichtung (15) derart schaltet, dass das zweite Kältemittel, das aus dem Verdichter (11) ausgegeben wird, durch den zweiten Wärmetauscher (24) strömt, und
die Rotationsgeschwindigkeit des Verdichters (11) und die Drosselgröße der Expansionseinrichtung (13) derart gesteuert wird, dass die Temperatur des in den Abgaswärme-Wärmetauscher (2) eintretenden ersten Kältemittels sinkt und die Temperatur auf der Auslassseite des zweiten Wärmetauschers (14) innerhalb des eingestellten Temperaturbereichs bleibt.

3. Abgaswärmerückgewinnungssystem (100) nach Anspruch 1 oder 2, wobei das zweite Kältemittel CO₂ ist.

## Revendications

1. Système de récupération de rejets thermiques (100) dans lequel circule un premier fluide frigorigène, le système de récupération de rejets thermiques (100) comprenant :
un dispositif de transfert (1) configuré pour faire circuler le premier fluide frigorigène ;
un échangeur de chaleur de récupération de rejets thermiques (6) configuré pour récupérer les rejets thermiques en provenance de l'extérieur du système de récupération de rejets thermiques ;
un échangeur de chaleur de fourniture de rejets thermiques (3) configuré pour fournir les rejets thermiques à l'extérieur du système de récupération de rejets thermiques ;
un échangeur de chaleur de rejets thermiques (2) configuré pour émettre la chaleur en excès dans le système, vers l'extérieur du système de récupération de rejets thermiques ;
un dispositif d'échange de chaleur auxiliaire (10) dans lequel circule un second fluide frigorigène, le dispositif d'échange de chaleur auxiliaire (10) présentant un compresseur (11), un premier échangeur de chaleur (12), un dispositif d'expansion (13), et un second échangeur de chaleur (14), connectés à celui-ci séquentiellement par des canalisations ;
l'échangeur de chaleur de récupération de rejets thermiques (6), le dispositif de transfert (1), le premier échangeur de chaleur (12), l'échangeur de chaleur de rejets thermiques (2), le second échangeur de chaleur (14), et l'échangeur de chaleur de fourniture de rejets thermiques (3), étant connectés séquentiellement par des canalisations pour faire circuler le premier fluide frigorigène,
le dispositif d'échange de chaleur auxiliaire (10) comprenant un contrôleur (50),
le contrôleur (50) étant configuré pour commander, lorsque la température du premier fluide frigorigène circulant du côté sortie du second échangeur de chaleur (14) est supérieure à une limite supérieure d'une plage de températures fixée, la vitesse de rotation du compresseur (11) et la quantité d'obturation du dispositif d'expansion (13), de telle sorte que la température du premier fluide frigorigène pénétrant dans l'échangeur de chaleur de rejets thermiques (2), augmente.

2. Système de récupération de rejets thermiques (100) selon la revendication 1, où le dispositif d'échange de chaleur auxiliaire (10) comprend un dispositif de commutation de canal de flux (15),
où le contrôleur (50) est configuré pour,
lorsque la température du premier fluide frigorigène circulant du côté sortie du second échangeur de chaleur (14), est supérieure à la limite supérieure de la plage de températures fixée,
provoquer la commutation du dispositif de commutation de canal de flux (15), de telle sorte que le second fluide frigorigène évacué du compresseur (11), circule à travers le premier échangeur de chaleur (12), et
commander la vitesse de rotation du compresseur (11) et la quantité d'obturation du dispositif d'expansion (13), de telle sorte que la température du premier fluide frigorigène pénétrant dans l'échangeur de chaleur de rejets thermiques (2) augmente, et que la température du côté sortie du second échangeur de chaleur (14) demeure dans la plage de températures fixée, et
lorsque la température du premier fluide frigorigène circulant du côté sortie du second échangeur de chaleur (14), est inférieure à une valeur limite supérieure de la plage de températures fixée,
provoquer la commutation du dispositif de commutation de canal de flux (15), de telle sorte que le second fluide frigorigène évacué du compresseur (11), circule à travers le second échangeur de chaleur (14), et
commander la vitesse de rotation du compresseur (11) et la quantité d'obturation du dispositif d'expansion (13), de telle sorte que la température du premier fluide frigorigène pénétrant dans l'échangeur de chaleur de rejets thermiques (2) diminue, et que la température du côté sortie du second échangeur de chaleur (14) demeure dans la plage de températures fixée.

3. Système de récupération de rejets thermiques (100) selon la revendication 1 ou 2, où le second réfrigérant est du CO₂.
